# EUROPÄISCHE PATENTANMELDUNG

(11) **EP 1 122 216 A2**
(43) Veröffentlichungstag der Anmeldung: **08.08.2001**
(21) Anmeldenummer: 01100151.8
(22) Anmeldetag: 16.01.2001
(51) Int. Cl.: C02F 1/46

(54) **Verfahren und Elektrolysezelle zum Reduzieren korrodierend wirkender Bestandteile in Flüssigkeiten**

(30) Priorität: 04.02.2000 DE 10004877
(71) Anmelder: SGL Acotec GmbH, 56427 Siershahn (DE)
(72) Erfinder: Härtel, Georg, Prof. Dr. Ing. habil, 09599 Freiberg (DE); Bienhüls, Chritian, Dipl.-Ing., 86405 Meitingen-Ostendorf (DE); Künzel, Jürgen, Dr.-Ing., 86672 Thierhaupten (DE)

(57) **Zusammenfassung**

Verfahren und Vorrichtung zum elektrochemischen Reduzieren von in Flüssigkeiten gelösten, oxidierend wirkenden Bestandteilen wie Chlor, Brom, Jod, Nitrationen, Sauerstoff. Die Vorrichtung besteht aus einer Elektrolysezelle (1, 1', 1'') mit zwei Räumen, die durch eine für Protonen durchlässige Kationenaustauschermembran (10) voneinander getrennt sind. Die oxidierend wirkenden Bestandteile werden in dem Kathodenraum (2, 2', 2'') elektrolytisch praktisch vollständig zu Wertstoffen oder unschädlichen Substanzen umgewandelt. Durch den Anodenraum (3) wird eine Protonensäure geleitet und es werden dort anodisch Protonen gebildet. Die in dem Kathodenraum (2, 2', 2'') benötigten Protonen wandern durch die Kationenaustauschermembran (10) in den Kathodenraum (2, 2', 2''). Beispielsweise wird so in dem Kathodenraum (2, 2', 2'') aus gelöstem Chlor Salzsäure. Vorteile: Infolge der Ausbildung der Elektrolysezelle (1, 1', 1'') als Zweiraumzelle mit Kationenaustauschermembran (10) können an der Anode (13) keine unerwünschten Reaktionen wie die Umkehrung der Kathodenreaktionen, beispielsweise das Bilden von Halogenen aus Halogenidionen, mehr stattfinden. Einfaches Entfernen von oxidierend wirkenden und störenden Bestandteilen aus Lösungen ohne Zusetzen von Fremdsubstanzen. Erhalten reiner Lösungen auf direktem Wege.

## Beschreibung

Die vorliegende Erfindung betrifft ein Verfahren zum elektrochemischen Reduzieren von in Flüssigkeiten gelösten, oxidierend wirkenden Bestandteilen aus der Gruppe Chlor, Brom, Jod, Nitrationen, Sauerstoff und eine Elektrolysezelle zum Durchführen des Verfahrens.

Bei einer Anzahl chemisch-verfahrenstechnischer Prozesse werden Flüssigkeiten erhalten, in denen oxidierend wirkende Bestandteile gelöst sind, die zwar unerwünscht, deren Entstehung aber wegen der vorherrschenden Reaktionsbedingungen nicht vermeidbar ist. Der Umgang und das Behandeln solcher Flüssigkeiten in der Verfahrenstechnik und im Labor ist häufig mit Problemen verbunden, die im wesentlichen auf die Korrosionswirkung der oxidierend wirkenden Inhaltsstoffe zurückgehen. In vielen Fällen wird die Korrosionswirkung der oxidierenden Bestandteile durch Zusammenwirken mit anderen in den Flüssigkeiten ebenfalls vorhandenen Substanzen verstärkt. Es ist deshalb das Ziel, derartige störende Bestandteile baldmöglichst aus den Flüssigkeiten zu entfernen oder sie in verwertbare Substanzen umzuwandeln.
Das Reinigen von oxidierende Bestandteile enthaltenden Lösungen ist jedoch besonders aufwendig, wenn diese Bestandteile in vergleichsweise geringen Konzentrationen vorkommen. Wenn indessen die Störungen, die von Ihnen ausgehen, erheblich sind, wird der erhöhte Aufwand häufig auch dann hingenommen, wenn das Entfernen nicht vollständig gelingt oder wenn dadurch zusätzlich fremde Chemikalien in die Flüssigkeiten eingeschleppt werden. Bei Flüssigkeiten, die für den Handel oder als Reaktionspartner bzw. als Lösungsmittel für chemische Reaktionen hergestellt werden, ist die Reinheit preisbestimmend und in vielen Fällen ausschlaggebend für die Verwendungsmöglichkeiten. Auch aus diesen Gründen wird versucht, möglichst reine Flüssigkeiten herzustellen oder, wo dies nicht gelingt oder wo Flüssigkeiten, die oxidierende Substanzen enthalten als Reaktionsprodukte anfallen, Verfahren zum Reinigen solcher Flüssigkeiten anzuwenden.
Beispiele für Flüssigkeiten, die die vorbeschriebenen und im folgenden weiter erläuterten Probleme verursachen, sind Flüssigkeiten, die gelöste, freie Halogene enthalten, wie Chlor in Wasser, Chlor in Salzsäure, Chlor in Schwefelsäure, Brom in Flüssigkeiten nach Bromierungen, Nitrationen in Schwefelsäure oder Sauerstoff in Wasser, insbesondere in Kesselspeisewasser.

Zum Entfernen von Chlor aus Salzsäure bedient man sich verschiedener Verfahren, die entweder sehr aufwendig und/oder mit weiteren Nachteilen wie z.B. dem Einschleppen anderer Verunreinigungen verbunden sind. Beispielsweise besteht ein Verfahren darin, Reduktionsmittel wie Sulfit, Thiosulfat oder Hydrazin, Hydroxylamin oder Salze der beiden letztgenannten Stoffe zuzusetzen. Dieses Verfahren hat jedoch schwerwiegende Nachteile: Erstens ist das Hantieren mit diesen Stoffen wegen deren Toxizität nicht unbedenklich, außerdem werden Fremdsubstanzen in die zu behandelnde Flüssigkeit eingebracht, deren Komponenten mindestens teilweise in ihr verbleiben und schließlich sind diese Chemikalien vergleichsweise teuer. Nach anderen Verfahren bedient man sich des Rektifizierens und Adsorptions- oder Absorptionsprozessen oder Kombinationen dieser Verfahren. Wegen der chemischen Gleichgewichtsverhältnisse ergeben die letztgenannten Verfahren, besonders wenn sie großtechnisch angewendet werden, keine völlig chlorfreie Salzsäure. Wenn mit Adsorptionsmitteln wie z.B. Aktivkohle gearbeitet wird, ist zudem das Regenerieren und das Entsorgen der erschöpften Adsorptionsmittel problematisch und mit beträchtlichem Aufwand verbunden. Für Flüssigkeiten, die freie Halogene enthalten, insbesondere chlorhaltige Salzsäure, müssen wegen ihres sehr großen Korrosionspotentials Apparate aus teuren Speziallegierungen, aus Glas oder Email oder aus Stahl, der mit Kunststoffen, insbesondere Fluorpolymeren ausgekleidet ist oder Apparate aus mit Kunstharz imprägniertem Graphit verwendet werden. Dabei muß beachtet werden, daß selbst diese Materialien nicht völlig resistent gegen den oxidativen Angriff der chlorhaltigen Salzsäure sind und damit nur eine begrenzte Standzeit haben. Da in der chemischen Technik, beispielsweise beim Kühlen, Kondensieren, Verdampfen, Rektifizieren oder Absorptions-, Desorptionsprozessen in großem Umfang mit chlorhaltigen - dies ist nicht zu verwechseln mit chloridhaltigen - sauren Flüssigkeiten wie chlorhaltiger Salzsäure gearbeitet wird, ist dies ganz allgemein ein schwerwiegendes technisches Problem. Derartige Salzsäuren fallen immer an, wenn Salzsäure durch Verbrennen von chlorwasserstoff- oder chlorhaltigen Gasen oder chlororganischen Verbindungen mit Sauerstoff oder Luft entsteht. Als Reaktionsprodukte von Chlorierungs- und Bromierungsverfahren, speziell bei organisch chemischen Prozessen oder auch nach dem Verbrennen von halogen- und halogenidhaltigen Verbindungen, das heute in großem Umfang zum Beseitigen dieser Verbindungen in der Industrie und in Müllverbrennungsanlagen durchgeführt wird, fallen große Mengen halogenhaltiger Halogenwasserstoffsäuren an, die wegen des ihnen innenwohnenden Korrosionspotentials aus verfahrenstechnischer Sicht schwer zu handhaben und aus wirtschaftlicher Sicht minderwertig sind.
Bezüglich der Notwendigkeit zum Beseitigen des Korrosionspotentials gilt Entsprechendes für Nitrationen enthaltende Schwefelsäure oder gelösten Sauerstoff in Wasser, beispielsweise Kesselspeisewasser.

Es war deshalb die Aufgabe der dieser Patentanmeldung zugrunde liegenden Erfindung,
ein Verfahren bereitzustellen, mit dem in Flüssigkeiten enthaltene, oxidierend und/oder korrodierend wirkende, Bestandteile, insbesondere Bestandteile aus der Gruppe Chlor, Brom, Jod, Nitrat, Sauerstoff, mit geringem Aufwand und ohne das Eintragen von Fremdsubstanzen praktisch vollständig in Wertstoffe oder unschädliche Bestandteile umgewandelt werden können.
Es war ferner die Aufgabe, eine Apparatur zur Verfügung zu stellen, mit Hilfe der das Verfahren durchgeführt werden kann.
Es war desweiteren die Aufgabe, ein Verfahren und eine Vorrichtung zu schaffen, mit Hilfe derer aus oxidierend und/oder korrodierend wirkende Bestandteile enthaltenden Flüssigkeiten solche Flüssigkeiten bereitgestellt werden können, die ein wesentlich verringertes Korrosionspotential aufweisen und einen größeren verfahrenstechnischen und wirtschaftlichen Wert haben. Insbesondere war es die Aufgabe, mit Hilfe der erfindungsgemäßen Lösungen Möglichkeiten zu schaffen, ohne das Eintragen von Fremdsubstanzen Halogenwasserstoffsäuren herzustellen, die frei von gelösten Halogenen sind.

Die Aufgabe wird mit einem Verfahren zum elektrochemischen Reduzieren von Bestandteilen aus der Gruppe Chlor, Brom, Jod, Nitrationen, Sauerstoff, die in Flüssigkeiten gelöst sind und die oxidierend und/oder korrodierend wirken, bei dem zwischen der Anode und der Kathode einer Elektrolysezelle eine elektrische Spannung von einer Größe angelegt wird, daß die genannten oxidierenden Substanzen reduziert werden, dabei aber keine oder nur eine unwesentliche kathodische Wasserzersetzung stattfindet, gelöst, wobei die Elektrolysezelle
- aus einem Raum, der mindestens eine Zu- und eine Abführung für eine Flüssigkeit aufweist und der von einem Katholyten durchströmt wird und der im wesentlichen eine Festbett- oder eine Wirbelbettkathode enthält und
- aus einem Raum, der mindestens eine Zu- und eine Abführung für eine Flüssigkeit aufweist und der gegen protonensaure Medien beständig ist und der eine Anode enthält, die gegen protonensaure Medien beständig ist und der von einem Anolyten durchströmt wird, besteht und wobei
- die Zelle Einrichtungen aufweist, mit denen eine elektrische Potentialdifferenz zwischen der Anode und der Kathode aufrechterhalten und ein elektrolytischer Prozeß in Gang gehalten wird und wobei
- der Kathodenraum vom Anodenraum durch eine Kationenaustauschermembran getrennt ist und
- die Kationenaustauschermembran beständig ist gegen die in Flüssigkeiten gelösten, oxidierend und/oder korrodierend wirkenden zu reduzierenden Bestandteile und
- die Fest- oder Wirbelbettkathode im Kathodenraum so angeordnet ist, daß der Katholyt die Kathode durchströmen muß und
- mindestens der Kathodenraum und die Kathode aus Materialien bestehen, die gegen die in Flüssigkeit gelösten, oxidierend und/oder korrodierend wirkenden zu reduzierenden Bestandteile resistent sind und
- der Kathodenraum von einem Katholyten durchströmt wird, in dem mindestens eine der zu reduzierenden Substanzen aus der Gruppe Chlor, Brom, Jod, Nitrationen, Sauerstoff gelöst ist und
- sich der Anodenraum an die Kationenaustauschermembran anschließt und
- der Anodenraum von einer Flüssigkeit durchströmt wird, die Protonen in Lösung enthält.
   Desweiteren wird die Aufgabe durch eine Elektrolysezelle gelöst, die im wesentlichen aus zwei Räumen, nämlich einem Raum, der eine Kathode enthält, der mindestens eine Zuführung und mindestens eine Abführung für den Katholyten aufweist und der von einem Katholyten durchströmbar ist und einem Raum, der eine Anode enthält, der mindestens eine Zuführung und mindestens eine Abführung für den Anolyten aufweist und der von einem Anolyten durchströmbar ist, besteht, wobei der Kathodenraum vom Anodenraum durch eine für Ionen durchlässige Membran getrennt ist und wobei die Zelle Einrichtungen aufweist, mit denen eine elektrische Potentialdifferenz zwischen der Anode und der Kathode aufrechterhalten und ein elektrolytischer Prozeß in Gang gehalten werden kann,
   dadurch gekennzeichnet,
- daß mindestens der Kathodenraum und die Kathode aus Materialien bestehen, die gegen freie Halogene aus der Gruppe Chlor, Brom, Jod, resistent sind,
- daß die Kathode als Festbett oder als Wirbelbett ausgebildet ist und
- daß die Kathode im Kathodenraum so angeordnet ist, daß der Katholyt die Kathode durchströmen muß,
- daß die für Ionen durchlässige Membran eine für Protonen durchlässige Kationenaustauschermembran ist, die gegen freie Halogene aus der Gruppe Chlor, Brom, Jod beständig ist,
- daß der Kathodenraum von einem Katholyten durchströmbar ist, der reduzierbare Substanzen aus der Gruppe Chlor, Brom, Jod, Nitrationen, gelöster Sauerstoff enthält
- daß sich der Anodenraum an die Kationenaustauschermembran anschließt,
- daß der Anodenraum von einer Flüssigkeit durchströmbar ist, die Protonen in Lösung enthält und
- daß der Anodenraum und die Anode gegen protonensaure Medien beständig sind.

Die Unteransprüche geben vorteilhafte Ausgestaltungen der erfinderischen Lösung wieder.

Das im folgenden weiter beschriebene Verfahren gemäß der Erfindung, das aus der Kombination der in den Ansprüchen enthaltenen Merkmale besteht und die Elektrolysezelle dienen dazu, oxidierend und/oder korrodierend wirkende Bestandteile aus Flüssigkeiten zu entfernen. Mit dem Verfahren ist es möglich, bis zur Sättigung in Lösung vorliegende Konzentrationen dieser Bestandteile zu entfernen, bzw. umzuwandeln. Ein besonderes Merkmal des Verfahrens ist es, daß auch in geringen Mengen in Flüssigkeiten vorhandene oxidierend wirkende Bestandteile praktisch vollständig reduziert werden können. So kann beispielsweise Chlor, das in einer Konzentration von 200, 100 oder gar 50 ppm in Salzsäure vorliegt, problemlos zu Chlorid reduziert werden. Bei Vorliegen höherer Konzentrationen ist es unter Umständen erforderlich, mehrstufige Anlagen zu verwenden, d.h., 2 oder mehr entsprechend ausgelegte Elektrolysezellen hintereinanderzuschalten. Die untere Abscheidegrenze für die störenden Bestandteile liegt unterhalb der Konzentrationen, die mittels Redoxpotenzialmessungen nachweisbar sind.

Um beim Behandeln der Lösungen optimale Stoffumsätze und optimale elektrische Umsätze, d.h. im vorliegenden Falle eine praktisch vollständige Reduktion der oxidierend wirkenden Begleitbestandteile zu erzielen, wurde für die Kathode eine durchströmbare dreidimensionale Elektrode in der Form einer Festbettkathode oder einer Wirbelbettkathode gewählt. Dieser Kathodentyp ist auch für das Behandeln niedrig konzentrierter Lösungen sehr gut geeignet. Wenn die Flüssigkeit, die behandelt werden soll, eine derartige Kathode, die eine möglichst große, flüssigkeitszugängliche Oberfläche haben muß, durchströmt, findet eine Vielzahl von Berührungen der Flüssigkeit und der in ihr befindlichen Stoffe mit Oberflächenpunkten der Kathode statt. Dabei gehen Elektronenübergänge vonstatten, d.h., es gehen elektrochemische Umsetzungen vor sich. Der Vorteil einer Festbettelektrode liegt auch darin, daß in ihr der Stromtransport durch direkte Elektronenleitung in fester Phase, also weitgehend ungehindert stattfindet. Der Spannungsabfall ist deshalb entsprechend gering. Die Elektrolysezelle kann bei einer solchen Kathode mit niedrigeren elektrischen Spannungen betrieben werden.
Beim Durchführen des Verfahrens mit einer Wirbelbettelektrode wird zwar auch eine vergleichbare Anzahl von Stößen zwischen den Oberflächen der Kathode und den behandelten Flüssigkeiten erreicht, doch ist der Ladungstransport auf Stöße zwischen den Partikeln des Wirbelbettes angewiesen und damit etwas behindert, was zu schlechteren elektrischen und damit auch zu schlechteren Stoffumsätzen führt. Die Spannungsabfälle sind hier entsprechend größer (Chem.-Ing.-Tech. 55 (1983, Nr.1, S.23-30). Wirbelbettkathoden werden deshalb in der Regel verwendet, wenn die Flüssigkeiten, die behandelt werden sollen, mit Stoffen verunreinigt sind, die sich auf den Oberflächen der Kathode absetzen und sie dadurch desaktivieren können. Beim Betrieb des Wirbelbettes werden die Oberflächen der Wirbelkörper durch die Stöße gegeneinander und das Reiben aneinander ständig gereinigt. Ein Desaktivieren findet deshalb hier nicht statt.
Die Kathode kann den Kathodenraum nur zu einem Teil ausfüllen, was besonders für den Fall der Anwendung eines Wirbelbettes zutrifft, sie kann ihn aber auch vollständig ausfüllen. Was ihre Form betrifft, kann sie einen über die Länge und die Breite gleichen Querschnitt haben. Für das Erzielen guter Wirkungen, besonders beim Behandeln von Flüssigkeiten, die geringere Konzentrationen an oxidierenden Bestandteilen enthalten, haben die Kathoden nach einer an sich bekannten Lösung (siehe Chem.-Ing.-Tech. 55, (1983) Nr.1, S.26) am eintrittseitigen Ende der Zelle einen vergleichsweise kleinen und nach oben, zum Flüssigkeitsauslaß zu einen vergleichsweise großen Querschnitt. Das hat zur Folge, daß im unteren, der Anströmöffnung des Kathodenraumes nahen Teil der Kathode auch bei einem geringeren Oberflächenangebot gute elektrochemische Umsätze erreicht werden, da hier die Konzentration an reduzierbaren Bestandteilen noch vergleichsweise hoch ist. Mit zunehmendem Höherwandern in der Kathode verarmt der Katholyt mehr und mehr an reduzierbaren Bestandteilen und es muß ihm eine größere Oberfläche zur Verfügung stehen, damit mehr Oberflächenberührungen und dabei elektrochemische Umsätze zwischen der Kathode und dem Katholyten stattfinden. Im obersten Teil der Kathode steht dem Katholyten ein Maximum an Oberflächen zur Verfügung und damit gelingt es, die letzten oxidierbaren Bestandteile trotz der dort sehr niedrigen Konzentrationen an ihnen zu reduzieren.

Die Kathode muß aus einem Material bestehen, das gegen Halogene, insbesondere gegen Chlor in sauren Medien beständig ist. Derartige Werkstoffe sind auch gegen nitrathaltige Schwefelsäure und gelösten Sauerstoff beständig. Hier können alle Materialien, die als Anodenmaterial in der Chloralkalielektrolyse eingesetzt werden, wie beispielsweise mit Platin oder anderen Edelmetallen der Platingruppe oder mit Oxiden oder Mischoxiden der Elemente der Platingruppe Ru, Rh, Pd, Os, Ir und Pt, beispielsweise Platinmischoxid oder Rutheniumoxid, vergütetes Titan, insbesondere in Form von hochporösem Titanschwamm oder Sintertitan, verwendet werden. Nach einer bevorzugten Ausführungsform besteht die Kathode jedoch aus porösem Graphit, insbesondere aus Elektrographit mit für Flüssigkeiten durchlässigen Poren und Kanälen. Eine Möglichkeit besteht darin, Graphitblöcke zu verwenden. Vorzugsweise wird jedoch eine Kathode aus einer Schüttung aus grobkörnigem Graphit, insbesondere Elektrographit mit einem Korndurchmesser von 0,5 bis 10, vorzugsweise von 3 bis 6 mm verwendet. Die Ausbildung der Graphitkornschüttung und die Strömungsgeschwindigkeit der zu behandelnden Flüssigkeit werden so gewählt, daß die Kornschüttung nicht aufgewirbelt wird und als Festbettkathode wirkt. Bei Anwendung von Strömungsgeschwindigkeiten, bei denen ein Aufwirbeln des Festbettes oder von Teilen des Festbettes befürchtet werden muß, wird der für die Kathode bestimmte Raum unter Einrütteln vollständig mit Graphitkörnern gefüllt und die Kathodenpackung unten und oben mit einem flüssigkeitsdurchlässigen Netzwerk oder mit Lochplatten gekammert. Für Wirbelbettkathoden wird ebenfalls eine Graphitkornschüttung verwendet, die der Fachmann bezüglich ihrer Körnung den jeweiligen Erfordernissen des Wirbelbettes anpaßt. Die Stromableiter von der Kathode zum Stromnetz bestehen aus Titan oder Graphit, beispielsweise in Form von Stäben, Rohren oder Barren, die problemlos und gut abgedichtet durch die Wände der Kathodenkammer geführt werden können. Die Wände des Kathodenraumes bestehen mit Ausnahme der an den Anodenraum angrenzenden Wand aus einem gegen die zu reduzierenden Oxidationsmittel in sauren Medien beständigen Kunststoff, vorzugsweise einem Kunststoff aus der Gruppe Polyethylen, Polypropylen, Polyvinylchlorid, per- und teilfluorierte Polymere. Sie können auch aus mit Kunststoff, speziell mit teil- oder perfluorierten Polymeren beschichteten oder gummierten Metallen, insbesondere Stahl, oder aus Keramik bestehen. Nach einer bevorzugten Ausführungsform bestehen die Wände aus flüssigkeitsdicht imprägniertem, besonders aus mit Harz imprägniertem und insbesondere aus mit Kunstharz imprägniertem Graphit.

Das Verfahren soll elektrochemisch vorteilhafterweise so geleitet werden, daß an der Kathode alle oxidierenden Substanzen wie Chlor, Brom, Jod, Nitrationen, Sauerstoff und davon insbesondere die Halogene Chlor, Brom, Jod reduziert werden, nicht aber kathodisch Wasserstoff freigesetzt wird. Dies wird erreicht, wenn die Elektrolysezelle mit einer Spannung von 1 bis 20 V betrieben wird. Spannungen über 2 V müssen, angewendet werden, wenn dies der Spannungsabfall in der Zelle erfordert. Das Verfahren kann auch mit höheren Spannungen durchgeführt werden. Durch die dabei einsetzende Freisetzung von Wasserstoff sinkt jedoch der elektrische Wirkungsgrad mehr und mehr und es müssen Vorkehrungen zum Abscheiden und Fassen des entwickelten Wasserstoffs getroffen werden.

Ein Problem beim Lösen der Aufgabe der Erfindung und beim Konstruieren der Elektrolysezelle war es, zu verhindern, daß kathodisch reduzierte Bestandteile an die Anode gelangen und dort wieder oxidiert werden. Im Falle des Systems Chlor/Chlorid hätte dies zu einer unerwünschten Rückbildung von elementarem Chlor und damit zur Ineffektivität des Verfahrens geführt. Dieses Problem wurde durch die Auslegung der Elektrolysezelle als Zweikammerzelle mit einem vom Kathodenraum getrennten Anodenraum gelöst. Dabei ist der Kathodenraum vom Anodenraum durch eine Kationenaustauschermembran getrennt. Der Anodenraum wird von einer Flüssigkeit, die positiv geladene Wasserstoffionen, im folgenden Protonen genannt, enthält, durchströmt. Durch die Kationenaustauschermembran treten unter der Einwirkung des in der Elektrolysezelle vorhandenen elektrischen Feldes die im Anodenraum befindliche Protonen in dem Maße hindurch, wie im Kathodenraum reduzierte Substanzen wie beispielsweise Halogenidionen aus Halogenen entstehen. Anionen wie Chlorid oder Nitrat können diese Membran nicht passieren. Die anderen Wände des Anodenraums bestehen aus den gleichen Materialien wie dies für die Wände des Kathodenraumes vorbeschrieben worden ist. Die Anode besteht vorzugsweise aus Titan, das mit einer Platinmischoxid- oder mit einer Ir-Ru-Beschichtung aktiviert ist. Vorzugsweise werden handelsübliche aktivierte Elektroden dieser Art aus Titanstreckmetall als Basisgerüst verwendet. Bei der Wahl des Anodenmaterials muß darauf geachtet werden, daß es keine zu hohe Sauerstoffüberspannung hat. Der Protonenträger, der den Anodenraum durchströmt, soll einen vergleichsweise großen Dissoziationsgrad wie beispielsweise verdünnte Schwefelsäure, Phosphorsäure oder Perchlorsäure haben, damit an der Kationenaustauschermembran stets eine hinreichend große Konzentration von Protonen vorhanden ist. Als Protonenträger nicht verwendbar sind Säuren, deren Anionen beim Behandeln der jeweiligen Flüssigkeiten im Kathodenraum entstehen können. Das Durchströmen des Anodenraumes mit dem Protonenträger hat außerdem den Effekt, daß etwa durch Diffusion durch die Kationenaustauschmembran in den Anodenraum eingedrungene geringe Mengen unerwünschter Stoffe aus dem Anodenraum entfernt werden und nicht an die Anode gelangen. An der Anode wird Sauerstoff entwickelt und zusammen mit der Anodenflüssigkeit abgeführt und dann abgetrennt. Als Ausgleich muß der Anodenflüssigkeit eine dem entwickelten Sauerstoff entsprechende Menge Wasser zugesetzt werden.

Die Kationenaustauschermembran muß gegen Halogene aus der Gruppe Chlor, Brom, Jod in saurem Medium und gegen nitrathaltige Schwefelsäure beständig sein. Sie besteht aus einem mit einem anionischen Liganden wie z.B. der Sulfonsäuregruppe dotierten Polymeren oder Copolymeren, das aus Monomeren aus der Gruppe Tetrafluorethylen, Hexafluorpropylen, Monochlortrifluorethylen, Vinylidenfluorid und alpha-beta-beta-Trifluorstyrol hergestellt worden ist. Derartige Membranen sind unter anderem unter der Markenbezeichnung Nafion (Inhaber Du Pont) im Handel erhältlich. Für die vorliegende Erfindung ist die Verwendung von Nafion® 324 oder 117 und von Fumatec FT-FKS als Kationenaustauschermembranen vorteilhaft.

Nach einer bevorzugten Ausführungsform befindet sich zwischen der Kathode und der Kationenaustauschermembran ein korrosionsbeständiges Trenn- und Stützgewebe oder -Gitter, im folgenden kurz Gitter genannt, das einen praktisch ungehinderten Flüssigkeitsdurchtritt von der Kationenaustauschermembran in den Kathodenraum und vom Kathodenraum zur Kationenaustauschermembran gestattet. Dieses Gitter soll die Kationenaustauschermembran mechanisch stützen, gegen mechanische Beschädigungen schützen und es kann sie gegebenenfalls gegen die Kathode elektrisch isolieren. Letzteres ist jedoch nicht Bedingung. Es besteht aus den gleichen Materialien wie sie für die Wände des Kathodenraumes vorbeschrieben sind aber auch aus Kohlenstoff, aus Titan oder Tantal. Es kann z.B. die Form eines Gewebes, Geflechtes, Gestrickes, Netzwerks, Gitters, eines Sinterkörpers oder einer Lochplatte haben. Das Gitter soll vollflächig an der Kationenaustauschermembran anliegen. Es kann auch mit dieser verbunden, beispielsweise verschweißt oder verklebt sein.

Im folgenden wird das Verfahren und es wird die Elektrolysezelle zum Durchführen des Verfahrens anhand der lediglich schematischen Wiedergaben in den nachfolgend aufgeführten Figuren und dem Diagramm beispielhaft beschrieben.

Es zeigen:
Figur 1: Eine erfindungsgemäße Elektrolysezelle;
Figur 2: Eine zweite Ausführungsform einer derartigen Elektrolysezelle;
Figur 3: Eine verbesserte Ausführungsform der Elektrolysezelle gemäß Figur 2;
Figur 4: Ein Fließbild zum Durchführen des Verfahrens;
Figur 5: Ein Meßwertprotokoll eines der Versuche zum Durchführen des Verfahrens in nicht schematischer Darstellung.

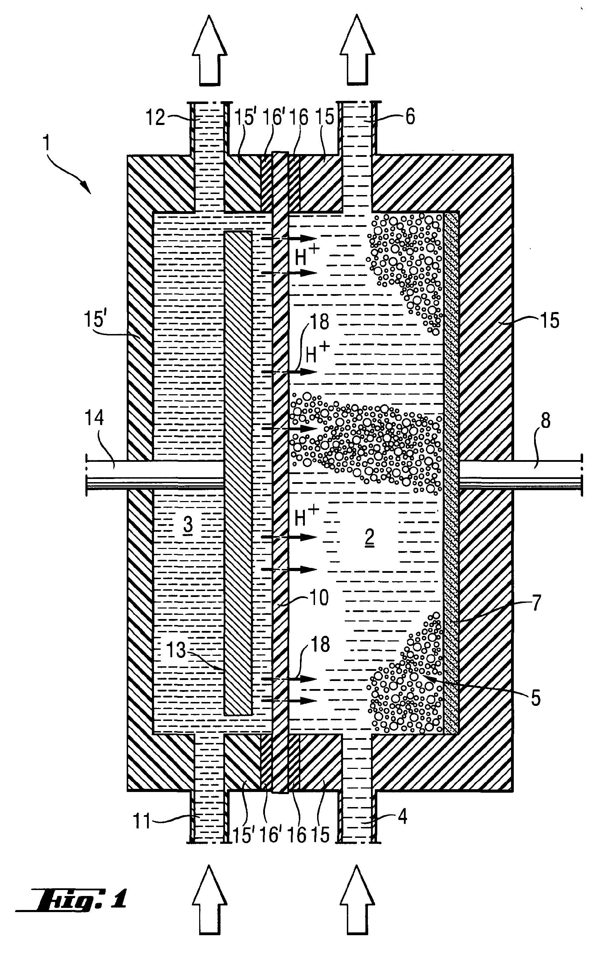

Die Elektrolysezelle 1 in Fig. 1 hat einen Kathoden- 2 und einen Anodenraum 3. Durch den Einlaß 4 strömt die Flüssigkeit in den Kathodenraum 2, die mindestens einen der oxidierenden Bestandteile wie Chlor, Brom, Jod, Nitrationen oder Sauerstoff enthält. Die Flüssigkeit strömt dann durch die hier als Festbett aus einer Schüttung aus Graphitkörnern mit einer Korngröße von 3 bis 6 mm ausgebildete Kathode 5 zum Auslaß 6 und wird durch diesen aus der Elektrolysezelle 1 abgeführt.

Die Strömung des Katholyten wird durch eine Pumpe und bekannte Meß- und Regeleinrichtungen, die hier nicht dargestellt sind, aufrechterhalten und geregelt. Die Festbettkathode 5 ist mit einer Platte 7 aus Graphit elektrisch kontaktiert. Diese Platte 7 ist mit einem Stromzuführungsstab oder -Barren 8 aus Elektrographit fest verbunden. Die in Richtung des Anodenraumes 3 auf die Festbettkathode 5 folgende Kationenaustauschermembran 10 trennt den Kathoden- 2 vom Anodenraum 3 gegen Flüssigkeitsdurchtritt durch den Katholyten und den Anolyten. Sie besteht aus einem mit anionischen Liganden dotierten Fluorpolymeren, das unter der Bezeichnung Nafion® 324 im Handel erhältlich ist. Bei der vorliegenden Elektrolyseanordnung treten durch diese Membran 10 nur Protonen aus dem Anoden- 3 in den Kathodenraum 2 über. Auf die Kationenaustauschermembran 10 folgt der Anodenraum 3, der eine Zu- 11 und eine Ableitung 12 für den Anolyten aufweist. Die Anode 13 besteht aus Titanstreckmetall, das mit einer Auflage von Platinmischoxid aktiviert und von der Firma De Nora Deutschland GmbH in den Handel gebracht wird. Als Stromabführung 14 von der Anode 13 dient ein Stab aus Titan, der flüssigkeitsdicht durch die Wand 15' der Anodenkammer 3 geführt ist. Die Anodenkammer 3 wird von Schwefelsäure als Protonenträger, die vorzugsweise eine Konzentration von 10 bis 35 Gew.-% H₂SO₄ in der Säure hat, durchströmt. Das Fließen des Anolyten wird durch eine Pumpe und bekannte Regeleinrichtungen bewirkt, die hier nicht dargestellt sind. Kathoden- 2 und Anodenraum 3 werden außer an der Kationenaustauschermembran 10 von einem Gehäuse 15, 15' aus Polypropylen begrenzt. An den Stoßstellen zwischen dem Gehäuse des Anodenraumes 3 und demjenigen des Kathodenraumes 2 befinden sich Dichtungen 16, 16' aus einem geeigneten Natur- oder Synthesekautschuk wie beispielsweise Ethylen-Propylen-ter-Polymerkautschuk (EPDM), zwischen denen 16, 16' die Kationenaustauschermembran 10 eingebettet ist. Beim Durchführen des Verfahrens werden an der Kathode 5 die oxidierend wirkenden, unerwünschten Bestandteile reduziert und in gewünschte oder zumindest nicht störende Bestandteile umgewandelt. Beispielsweise wird in Salzsäure gelöstes, elementares Chlor zu Chloridionen reduziert, so daß aus dem Chlor letztlich Salzsäure gebildet wird. Die für diesen Prozeß notwendigen Protonen treten aus dem als Anolyten wirkenden Protonenträger im Anodenraum 3 durch die Kationenaustauschermembran 10 in den Kathodenraum 2 über 18 und bewerkstelligen so den elektrischen Ausgleich. Für das Herstellen des elektrischen Ausgleichs im Anodenraum 3 wird dort letztlich aus Wasser Sauerstoff entwickelt, der zusammen mit dem Anolyten aus dem Anodenraum 3 entfernt wird. Der dadurch entstehende Wasserverlust muß ersetzt werden.

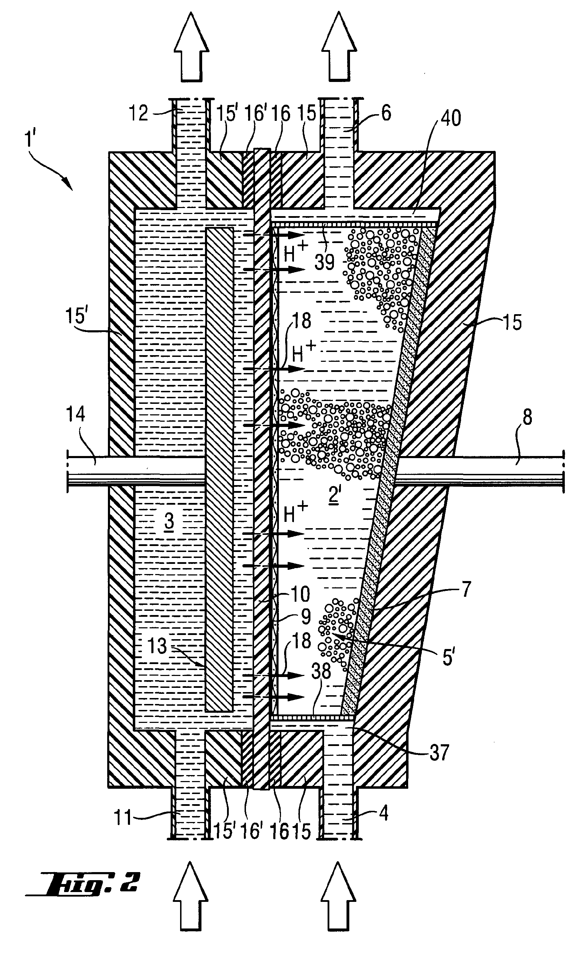

Figur 2 zeigt eine andere Ausführungsform der Elektrolysezelle 1. Als Besonderheit hat diese Zelle 1' eine unten schmale und sich nach oben erweiternde Kathode 5', deren durchströmbarer Raum und damit die für Berührungen mit dem Katholyten zur Verfügung stehende Oberfläche im unteren Teil der Zelle 1' vergleichsweise gering ist. Dieser durchströmbare Raum und damit die für Berührungen mit dem Katholyten zur Verfügung stehende Oberfläche und die für diese Berührungen zur Verfügung stehende Zeit nimmt der Form der Kathode 5' entsprechend zum oberen Teil der Zelle 1', d.h. in Strömungsrichtung ständig zu. Zweck einer solchen Ausformung der Kathode 5' ist es, möglichst optimale Umsätze in jeder Kathodenzone zu erzielen. Wenn der Katholyt über die Zuleitung 4 in den Kathodenraum 2' eintritt, ist er mit dem oxidierenden Bestandteil, der elektrochemisch reduziert werden soll, vergleichsweise hoch angereichert. Infolge dieser hohen Konzentration führt fast jede Berührung des Katholyten mit der Kathode 5' im unteren Teil des Kathodenraumes 2' zu einer elektrochemischen Umsetzung. Mit zunehmender Abreicherung nimmt die Zahl der elektrochemisch erfolgreichen Berührungen ab und die elektrochemischen Umsätze sinken mehr und mehr und es ist vorteilhaft und dies geschieht bei der dargestellten Kathode 5', dem Katholyten für das Aufrechterhalten guter Umsätze zusammen mit einem Reduzieren der Geschwindigkeit, d.h. mit einem Vergrößern der Verweilzeit des strömenden Elektrolyten, immer größer werdende Oberflächen anzubieten. Im oberen Teil des Kathodenraumes 2', wo die Konzentration an oxidierend wirkenden Bestandteilen auf ein Minimum abgesunken ist, muß die zur Verfügung stehende Kathodenoberfläche möglichst groß sein, um auch noch die letzten reduzierbaren Reste der störenden Bestandteile umzusetzen. Im Vergleich zu der in Fig. 1 dargestellten Elektrolysezelle 1 befindet sich in Figur 2 in der Elektrolysezelle 1' zwischen der Kathode 5' und der Kationenaustauschermembran 10 eine flache Lage aus einem flüssigkeitsdurchlässigen Stütz- und Netzwerk 9, Gitter 9 genannt, aus einem Gewebe aus Polyvinylchlorid. Es bedeckt die Kationenaustauschermembran 10 ganzflächig, schützt sie 10 vor mechanischen Beschädigungen und verhindert das Auftreten lokaler, elektrischer Störungen wie Spannungsspitzen, die zu Störungen bei der Elektrolyse führen könnten. Das Gitter kann auch mit der Kationenaustauschermembran 10 verbunden, beispielsweise verschweißt sein. Ein weiterer Unterschied zum Kathodenraum 2 der Elektrolysezelle 1 in Fig. 1 besteht im Vorhandensein eines Anström- und Verteilerraumes 37 für den Katholyten und eines flüssigkeitsdurchlässigen Siebbodens 38, auf dem die Kathode 5' aufliegt. Außerdem hat der Kathodenraum 2' hier im oberen Teil eine Siebplatte 39, die ein Ausspülen von Partikeln der Kathode 5' verhindert, und einen Sammel- und Abströmraum 40 für den von oxidierenden Bestandteilen befreiten Katholyten. Die hier nicht behandelten Komponenten dieser Elektrolysezelle 1' entsprechen den jeweiligen Komponenten der in Fig. 1 gezeigten Elektrolysezelle 1. Es wird auf diese Figur verwiesen.

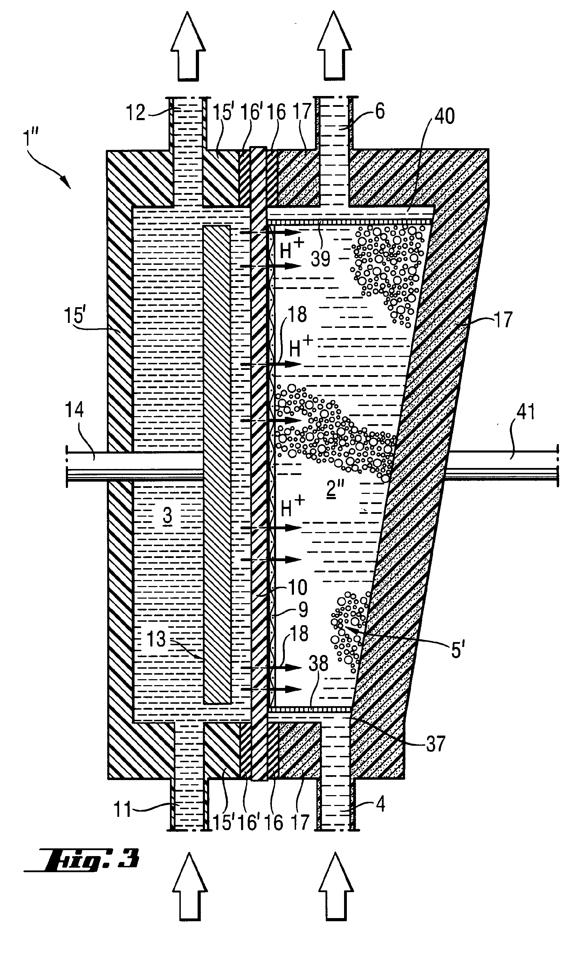

Figur 3 zeigt eine andere bevorzugte Ausführungsform der Elektrolysezelle 1, insbesondere der Elektrolysezelle 1'. Die Zelle 1'' der Figur 3 unterscheidet sich von der Elektrolysezelle 1' der Figur 2 dadurch, daß sie 1'' einen Kathodenraum 2'' hat, bei dem die Wände 17 aus flüssigkeitsdicht imprägniertem, speziell mit Harz und insbesondere mit einem Kunstharz imprägniertem Graphit bestehen. Die anderen Merkmale der Elektrolysezelle entsprechen denen der Figur 2 und werden hier nicht noch einmal beschrieben. Die Ausführung der Wände 17 des Kathodenraumes 2'' in imprägniertem Graphit hat gegenüber den entsprechenden Wänden 15 der Zellen 1, 1' der Figuren 1 und 2 den Vorteil, daß hier eine zusätzliche Platte 7 zum Kontaktieren des Kathodenbettes 5' nicht notwendig ist. Außerdem entfällt die nicht wiedergegebene Bohrung, die in den Figuren 1 und 2 notwendig ist, um den Stromzuführungsstab 8 durch das Gehäuse 15 aus dem Kathodenraum 2, 2' hinauszuführen und es entfällt die ebenfalls nicht dargestellte Abdichtung an der Durchführung des Stromzuführungsstabes 8 durch das Gehäuse 15, die, obgleich zum Stand der Technik gehörig, technisch schwierig und häufig eine Quelle von Störungen ist. Der imprägnierte Graphit ist elektrisch gut leitfähig. Der Stromzuführungsstab 41 hat bei dieser konstruktiven Lösung keine Berührung mehr mit dem Katholyten und kann somit auch aus elektrisch leitfähigen Materialien wie z.B. Kupfer oder Aluminium bestehen, die nicht beständig gegenüber dem Katholyten sind. Die Wand aus imprägniertem Graphit kann im übrigen an jeder passenden Stelle elektrisch kontaktiert werden. Ein Stromzuführungsstab 41 ist dazu nicht mehr zwingend notwendig. Es können statt dessen z.B. auch direkt an die Graphitwand 17 angeschraubte Kontaktschuhe, beispielsweise aus Kupfer verwendet werden.

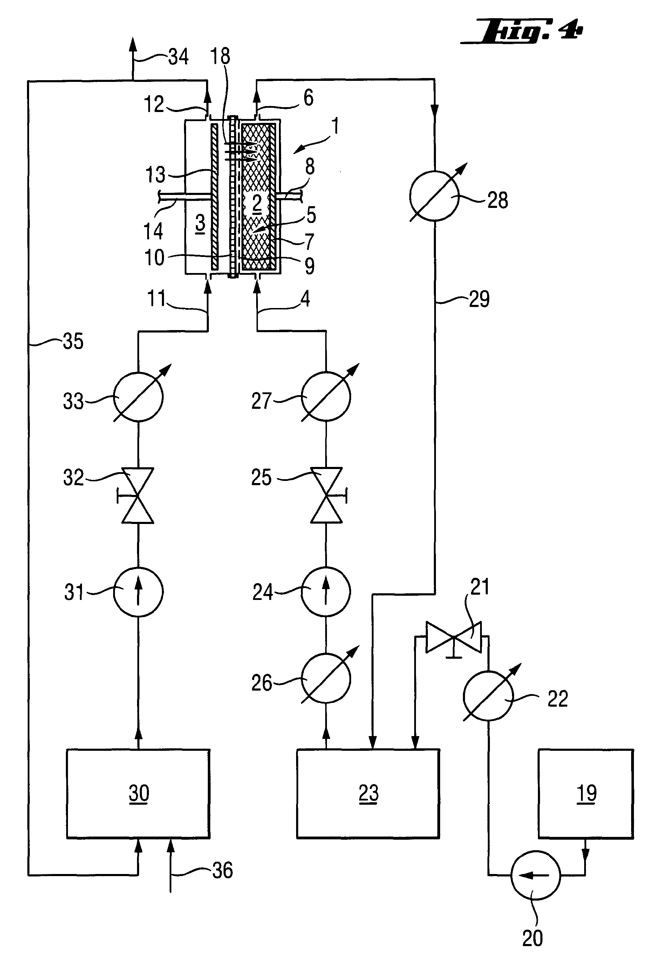

Figur 4 gibt die Durchführung des Verfahrens anhand eines Schemabildes, das gleichzeitig die Durchführung der Versuche zum Verifizieren der Erfindung veranschaulicht, wieder. Für den vorliegenden Fall wurde das Verfahren beispielhaft anhand der Reinigung von Salzsäure von darin gelöstem Chlor demonstriert. Für die Versuche mußte in einer Salzsäure, die als Katholyt vorgesehen war, ein bestimmter Gehalt an Chlor eingestellt werden. Dazu wurde dieser Salzsäure, die sich im Behälter 23 befand, kontinuierlich aus dem Vorratsgefäß 19 mittels der Pumpe 20 über das Regulierventil 21 das Äquivalent dessen an Natriumhypochloritlösung zugesetzt wie jeweils in der Elektrolysezelle 1 Chlor zu Chlorid reduziert werden sollte. Mit der Salzsäure reagiert das Natriumhypochlorit im Behälter 23 gemäß

NaOCl + 2 HCl ------ Cl₂ + H₂O + NaCl.

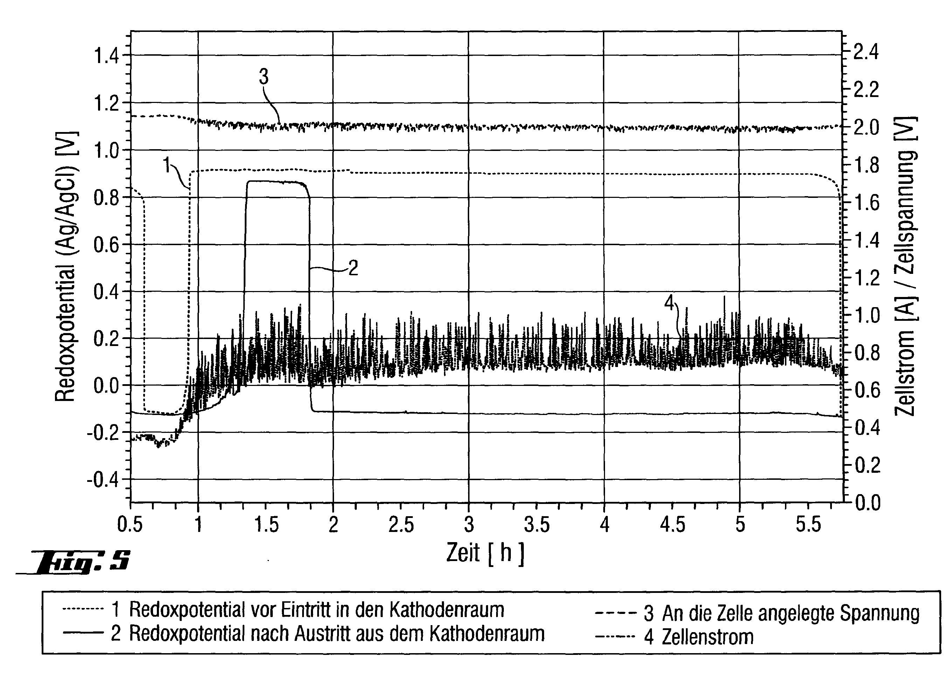

Die Stellung des Regulierventils 21 wurde mit Hilfe des Durchflußmessers 22 und einer entsprechenden Steuereinrichtung geregelt.
Beim Durchführen des Verfahrens mit von vorn herein mit Chlor verunreinigter Salzsäure entfällt der Behälter 19 samt Rohrleitung zum Behälter 23 und es entfallen die Pumpe 20, die Armatur 21 und der Durchflußmesser 22 und die zu behandelnde Salzsäure wird direkt über den Behälter 23 und die diesem Behälter nachgeschalteten Förder-, Regel- und Meßaggregate in die Elektrolysezelle 1 geleitet. Entsprechendes gilt auch für die anderen in dieser Anmeldeschrift aufgeführten Flüssigkeiten.
Die mit Chlor verunreinigte Salzsäure wurde aus dem Vorrats- und Puffergefäß 23 mittels der Pumpe 24 durch das Regulierventil 25 geregelt an der Einlaßstelle 4 in den Kathodenraum 2 der Elektrolysezelle 1 gefördert. Das Regeln wurde mit Hilfe des Durchflußmessers 26 und einer nicht dargestellten Steuereinrichtung bewerkstelligt. Das in der Salzsäure gelöste Chlor wurde beim Durchströmen der Festbettkathode 5, die im vorliegenden Fall aus Graphitkörnern mit einem Durchmesser im Bereich von 3 bis 5 mm bestand, vollständig zu Chlorid reduziert, so daß die Elektrolysezelle 1 am Austritt 6 ein Katholyt aus reiner, chlorfreier Salzsäure verließ. Diese praktisch vollständige Abreicherung wurde mit dem Gerät zum Messen des Redoxpotentials 28 in der Salzsäure nach der Elektrolysezelle 1 kontrolliert und festgestellt. Das Gerät 27 vor dem Kathodenraum 2 diente zum Messen des Redoxpotentials der Flüssigkeit vor dem Eintritt in die Elektrolysezelle 1. Beim Durchführen der Versuche wurde die Salzsäure über die Rohrleitung 29 wieder in den Behälter 23 zurückgeführt. Beim Durchführen des Verfahrens im kontinuierlichen, technischen Betrieb, wird die von den oxidierend wirkenden Bestandteilen gereinigte Flüssigkeit über diese Rohrleitung 29 entweder einer direkten weiteren Verwertung oder Zwischenbehältern bzw. Lagertanks zugeführt. Im Anodenkreislauf wurde als Protonenträger eine 25-Gewichts-%ige Schwefelsäure umgepumpt. Sie wurde aus dem Vorrats- und Pufferbehälter 30 mittels der Pumpe 31 über das vom Durchflußmesser 33 und eine nicht dargestellte Regeleinrichtung gesteuerte Regelventil 32 geregelt an der Einlaßvorrichtung 11 in den Anodenraum 3 der Elektrolysezelle 1 gefördert. An der Anode 13 wurde unter Bildung von Protonen Wasser verbraucht und Sauerstoff entwickelt, der zusammen mit dem Protonenträger die Elektrolysezelle an der Auslaßöffung 12 verließ. Das bei diesem Prozeß verbrauchte Wasser wurde der Schwefelsäure über die Rohrleitung 36, die in den Behälter 30 mündet, wieder zugegeben. In der Elektrolysezelle 1 wanderten die Protonen unter der Wirkung des angelegten elektrischen Feldes durch die Kationenaustauschermembran 10 in dem Maße in den Kathodenraum 2 wie dort Chloridionen an der Kathode 5 entstanden. Nach dem Austreten aus dem Anodenraum 3 wurde der entwickelte Sauerstoff mittels der Abscheidevorrichtung 34 von dem Protonenträger getrennt und gesondert verwertet. Der Protonenträger gelangte über die Rohrleitung 35 in den Vorrats- und Pufferbehälter 30 zurück.
Im folgenden wird die Erfindung anhand eines Ausführungsbeispiels weiter erläutert. Als Katholyt diente Salzsäure mit einem HCl-Gehalt von 25 Gewichtsprozent. Dieser Salzsäure wurde zum Erzeugen einer bestimmten Chlorkonzentration kontinuierlich eine wässerige Natriumhypochloritlösung mit einem Gehalt von 12 Gew.-% NaOCl zugesetzt. Als Anolyt diente eine Schwefelsäure mit einem H₂SO₄-Gehalt von 25 Gew.-%. Es wurde eine Versuchsapparatur gemäß Fig. 4 verwendet. Beim Beschreiben der Fig. 4 wurde bereits auf einige Gegebenheiten bei der Durchführung der Versuche eingegangen, die zum Verifizieren dieser Erfindung dienten. In den folgenden Ausführungen wird weiter auf Gegebenheiten der Fig. 4 verwiesen. Beim Durchführen des Versuches wurde an die Elektrolysezelle 1 eine elektrische Spannung von 2 V angelegt. Sodann wurde aus dem Vorrats- und Puffertank 23 mittels der Pumpe 24 erst einmal völlig chlorfreie Salzsäure von der oben angegebenen Konzentration in einer Menge von 50 l/Stunde durch den Kathodenraum 2 der Elektrolysezelle 1 und damit durch die Festbettkathode 5, die aus einer Packung aus Elektrographitkörnern von einer Korngröße von 3 bis 5 mm bestand, gepumpt. Die Salzsäure gelangte nach dem Austritt aus der Elektrolysezelle 1 über die Rohrleitung 29 in den Behälter 23 zurück. Parallel dazu wurde 25-%ige Schwefelsäure in einer Menge von 50 l/Stunde aus dem Vorrats- und Pufferbehälter 30 durch den Anodenraum 3 in den Behälter 30 zurückgepumpt. Bei diesem Einfahrvorgang wurde mittels des mit einer Ag/AgCl-Elektrode ausgerüsteten Meßgeräts 27 das Redoxpotential der in den Kathodenraum eintretenden und mittels des mit einer gleichen Elektrode ausgerüsteten Meßgeräts 28 das Redoxpotential der den Kathodenraum verlassenden Salzsäure gemessen. Es betrug -100 mV. Der Volumenstrom der Salzsäure durch den Kathodenraum wurde auf 50 l/Stunde eingestellt. Nach Abschluß dieser Grundeinstellung wurde der im Behälter 23 befindlichen Salzsäure aus Behälter 19 kontinuierlich 12-%ige Natriumhypochloritlösung in einer Menge von 0,1 ml/Minute zugesetzt, was zum Einstellen eines bestimmten Gehalts an gelöstem Chlor in der Salzsäure führte. Der Volumenstrom an chlorhaltiger Salzsäure wurde nun wieder auf 50 l/Stunde eingeregelt. Das Redoxpotential vor dem Kathodenraum 2 an Meßstelle 27 betrug infolge des Gehaltes an freiem Chlor nunmehr +900 mV. Nachdem die chlorhaltige Salzsäure nach ca. 20 Minuten durch den Kathodenraum hindurchgetreten war, betrug während der ersten 30 Minuten danach das Redoxpotential der den Kathodenraum 2 verlassenden Salzsäure an Meßstelle 28 etwas mehr als +800 mV. Nach dieser Einlaufzeit fiel das Redoxpotential steil auf den vorher gemessenen Referenzwert für chlorfreie Salzsäure von -100 mV ab und blieb auf diesem Wert über die gesamte restliche Versuchsdauer von über 4 Stunden. Dieses Beispiel beweist, daß nach dem erfindungsgemäßen Verfahren Chlor aus Salzsäure vollständig entfernt werden kann. Der geschilderte Versuchsablauf ist aus den Meßaufzeichnungen in der Figur 5 zu ersehen. Während des Versuchsverlaufs wurde eine kontinuierliche Abreicherung von 0,014 g/Minute an freiem Chlor erreicht. Die Zellvolumina von Anoden- 3 und Kathodenraum 2 betrugen je 100 cm³, die Anodenfläche betrug 100 cm2. Der Zellstrom wurde mit 0,75 A festgestellt. Als Kationenaustauschermembran wurde Nafion® 324 verwendet. Die Anode bestand aus Titanstreckmetall mit einer Auflage von Platinmischoxid (Bezugsquelle: De Nora Deutschland GmbH), die Kathode, die als Festbettkathode ausgebildet war, aus körnigem Elektrographit mit einer Korngröße von 3 bis 5 mm. Das flüssigkeitsdurchlässige Gitter 9 bestand aus einem Gewebediaphragma aus Polyvinylidenfluorid.
Weitere Versuche zeigten, daß auch die anderen genannten oxidierenden Bestandteile aus ihren Lösungen nach dem erfindungsgemäßen Verfahren reduktiv in gewünschte oder unschädliche Bestandteile umgewandelt werden konnten.
Die Vorteile der Erfindung sind:
Es werden ein Verfahren und eine Vorrichtung zum Durchführen des Verfahrens bereitgestellt, mit denen die vorbeschriebenen schädlichen, oxidierenden Bestandteile von Flüssigkeiten ohne großen Aufwand und ohne das Eintragen von Fremdchemikalien oder Aufsalzen vollständig in Wertstoffe oder in unschädliche Bestandteile umgewandelt werden können.
Es werden sehr reine und ohne weitere Behandlung weiterverarbeitungsfähige Flüssigkeiten erhalten.
Das Verfahren eignet sich sowohl für Lösungen mit sehr geringen als auch mit großen Gehalten von oxidierenden Substanzen.
Die nach dem Verfahren behandelten Flüssigkeiten haben ein weit geringeres Oxidations- und Korrosionspotential als vor der Behandlung. Sie können in weniger korrosionsgeschützten und damit preiswerteren Apparaturen gehandhabt werden und sie verursachen weit weniger Korrosionsschäden. Beispielsweise treten beim Behandeln von nach dem erfindungsgemäßen Verfahren von freien Halogenen gereinigter Salzsäure in verfahrenstechnischen Anlagen aus mit Kunstharz imprägniertem Graphit, aus Speziallegierungen oder aus mit Gummi oder Fluorpolymerauskleidungen geschütztem Stahl keine Korrosionserscheinungen mehr auf.
Bei der Synthese von HCl durch Verbrennen von Wasserstoff mit Chlor kann der zum Verschieben des Reaktionsgleichgewichts auf die Seite des Chlorwasserstoffs erforderliche Wasserstoffüberschuß erheblich reduziert werden, da der dann verbleibende Chlorgehalt der Säure nach dem erfindungsgemäßen Verfahren ohne Probleme und vollständig entfernt werden kann;
freie Halogene enthaltende Halogenwasserstoffsäuren werden durch die elektrochemische Behandlung aufkonzentriert. Ihr verfahrenstechischer und kommerzieller Wert wird erhöht.

### Bezugszeichenliste

- 1, 1', 1'': Elektrolysezelle
- 2, 2', 2": Kathodenraum
- 3: Anodenraum
- 4: Zuleitung für Katholyten
- 5, 5': Kathode
- 6: Ableitung für Katholyten
- 7: Kathodenplatte zum elektrischen Kontaktieren der Kathode (5)
- 8: Stromzuführungsstab zu (7)
- 9: Stützgewebe oder/und Schutzgitter für Kationenaustauschermembran
- 10: Kationenaustauschermembran
- 11: Zuleitung für Anolyten
- 12: Ableitung für Anolyten
- 13: Anode
- 14: Stromzuführung zu Anode (13)
- 15: Gehäuse für Kathodenraum
- 15': Gehäuse für Anodenraum
- 16, 16': Dichtung zwischen (15) und (15')
- 17: Gehäuse des Kathodenraumes (2") aus imprägniertem Graphit
- 18: Symbol für den Protonenübertritt vom Anoden-(3) in den Kathodenraum (2)
- 19: NaOCl-Vorratsgefäß
- 20: Pumpe für NaOCl-Lösung
- 21: Regelventil für NaOCl-Lösung
- 22: Durchflußmesser für NaOCl-Lösung
- 23: Vorrats- und Pufferbehälter für HCl, bzw. für oxidierende Bestandteile enthaltende Lösungen
- 24: Pumpe zum Fördern der oxidierende Bestandteile enthaltenden Lösung
- 25: regelbares Ventil für oxidierende Bestandteile enthaltende Flüssigkeiten
- 26: Durchflußmesser zum Regeln von (25)
- 27: Gerät zum Messen des Redoxpotentials vor Kathodenraum (2)
- 28: Gerät zum Messen des Redoxpotentials nach Kathodenraum (2)
- 29: Rohrleitung für im Kathodenraum (2) behandelte Flüssigkeiten
- 30: Vorrats- und Puffergefäß für Protonenträger
- 31: Pumpe für Protonenträger
- 32: regelbares Durchflußventil für Protonenträger
- 33: Durchflußmesser für Protonenträger
- 34: Abscheider für Sauerstoff aus Protonenträger
- 35: Rückführleitung für Protonenträger
- 36: Zuführung von Wasser zum im Vorrats- und Puffergefäß (30) enthaltenen Protonenträger
- 37: Anström- und Verteilerraum in Kathodenraum (2') in Fig. 2
- 38: untere Siebplatte in Kathodenraum (2') in Fig. 2
- 39: obere Siebplatte in Kathodenraum (2') in Fig. 2
- 40: Sammel- und Abströmraum in Kathodenraum (2') in Fig. 2
- 41: Stromzuführung zu Gehäuse (17) des Kathodenraumes aus Graphit (2")

## Patentansprüche

1. Verfahren zum elektrochemischen Reduzieren von Bestandteilen aus der Gruppe Chlor, Brom, Jod, Nitrationen, Sauerstoff, die in Flüssigkeiten gelöst sind und die oxidierend und/oder korrodierend wirken, bei dem zwischen der Anode (13) und der Kathode (5, 5') einer Elektrolysezelle (1, 1', 1'') eine elektrische Spannung von einer Größe angelegt wird, daß die genannten oxidierenden Substanzen reduziert werden und dabei keine oder nur eine unwesentliche kathodische Wasserzersetzung stattfindet,
wobei die Elektrolysezelle (1, 1', 1'')
- aus einem Raum (2, 2', 2''), der mindestens eine Zu-(4) und eine Abführung (6) für eine Flüssigkeit aufweist und der von einem Katholyten durchströmt wird und der im wesentlichen eine Festbett- (5, 5') oder eine Wirbelbettkathode (5, 5') enthält, und
- aus einem Raum (3), der mindestens eine Zu- (11) und eine Abführung (12) für eine Flüssigkeit aufweist und der gegen protonensaure Medien beständig ist und der eine Anode (13) enthält, die gegen protonensaure Medien beständig ist und der von einem Anolyten durchströmt wird, besteht und wobei
- die Zelle (1, 1', 1") Einrichtungen aufweist, mit denen eine elektrische Potentialdifferenz zwischen der Anode (13) und der Kathode (5, 5') aufrechterhalten und ein elektrolytischer Prozeß in Gang gehalten wird und wobei
- der Kathodenraum (2, 2', 2'') vom Anodenraum (13) durch eine für Protonen durchlässige Kationenaustauschermembran (10) getrennt ist und
- die Kationenaustauschermembran (10) beständig ist gegen die in Flüssigkeiten gelösten, oxidierend und/oder korrodierend wirkenden zu reduzierenden Bestandteile und
- die Fest- (5, 5') oder Wirbelbettkathode (5, 5') im Kathodenraum (2, 2', 2'') so angeordnet ist, daß der Katholyt die Kathode (5, 5') durchströmen muß und
- mindestens der Kathodenraum (2, 2', 2'') und die Kathode (5, 5') aus Materialien bestehen, die gegen die in Flüssigkeiten gelösten, oxidierend und/oder korrodierend wirkenden zu reduzierenden Bestandteile resistent sind und
- der Kathodenraum (5, 5') von einem Katholyten durchströmt wird, in dem mindestens eine der zu reduzierenden Substanzen aus der Gruppe Chlor, Brom, Jod, Nitrationen, Sauerstoff gelöst ist und
- sich der Anodenraum (3) an die Kationenaustauschermembran (10) anschließt und
- der Anodenraum (3) von einer Flüssigkeit durchströmt wird, die Protonen in Lösung enthält.

2. Verfahren gemäß Patentanspruch 1,
dadurch gekennzeichnet, daß
es mit einer Festbettkathode (5, 5') aus Graphit durchgeführt wird.

3. Verfahren gemäß Patentanspruch 2,
dadurch gekennzeichnet, daß
es mit einer Festbettkathode (5, 5'), die aus Graphitkörnern besteht, durchgeführt wird.

4. Verfahren gemäß Patentanspruch 1,
dadurch gekennzeichnet, daß
es mit einer Kathode (5) aus porösem Titanschwamm oder Sintertitan, der/das mit Edelmetallen aus der Platingruppe oder mit Edelmetalloxiden von Elementen der Platingruppe aktiviert worden ist, durchgeführt wird.

5. Verfahren gemäß Patentanspruch 1,
dadurch gekennzeichnet, daß
es mit einer Wirbelbettkathode (5, 5') aus Graphitkörnern durchgeführt wird.

6. Verfahren gemäß einem oder mehreren der Patentansprüche 1 bis 5,
dadurch gekennzeichnet, daß
es mit einer Kationenaustauschermembran (10), die aus einem mit einem anionischen Liganden dotierten Polymeren oder Copolymeren, das aus Monomeren aus der Gruppe Tetrafluorethylen, Hexafluorpropylen, Monochlortrifluorethylen, Vinylidenfluorid und alpha-beta-beta-Trifluorstyrol hergestellt worden ist, besteht, durchgeführt wird.

7. Verfahren gemäß einem oder mehreren der Patentansprüche 1 bis 6,
dadurch gekennzeichnet, daß
es mit einem für Flüssigkeiten durchlässigen korrosionsbeständigen Stützgitter (9) für die Kationenaustauschermembran (10), das zwischen der Kationenaustauschermembran (10) und der Kathode (5, 5') angeordnet ist und das aus einem Netz, Geflecht, Gestrick, Gewebe, Gitter, einem Sinterkörper oder einer perforierten Platte aus einem Material aus der Gruppe Polyethylen, Polypropylen, Fluorpolymere, Polyvinylchlorid, Kohlenstoff, Titan, Tantal besteht, durchgeführt wird.

8. Verfahren gemäß einem oder mehreren der Patentansprüche 1 bis 7,
dadurch gekennzeichnet, daß
der Anodenraum (3) von einem Protonenträger aus der Gruppe verdünnte Schwefelsäure, Orthophosphorsäure, Perchlorsäure, durchströmt wird.

9. Verfahren gemäß einem oder mehreren der Patentansprüche 1 bis 8,
dadurch gekennzeichnet, daß
es mit einer Anode (13) aus Titan, das mit einer Beschichtung aus Platinmischoxid versehen ist, durchgeführt wird.

10. Verfahren gemäß einem oder mehreren der Patentansprüche 1 bis 9,
dadurch gekennzeichnet, daß
es mit einer Elektrolysezelle (1'') durchgeführt wird, deren Kathodenraum (2") außer an der Seite, die von der Kationenaustauschermembran (10) begrenzt wird, Wände (17) aus flüssigkeitsdicht imprägniertem Graphit hat.

11. Verfahren gemäß einem oder mehreren der Patentansprüche 1 bis 10,
dadurch gekennzeichnet, daß
es mit einer Zellenspannung im Bereich von 1 bis 20 V durchgeführt wird.

12. Verfahren gemäß einem oder mehreren der Patentansprüche 1 bis 11,
dadurch gekennzeichnet, daß
es mit einem Kathodenraum (2', 2'') und mit einer Kathode (5') durchgeführt wird, deren Querschnitt sich in Strömungsrichtung des Katholyten vergrößert.

13. Verfahren gemäß einem oder mehreren der Patentansprüche 1 bis 12,
dadurch gekennzeichnet, daß
es mit einer depolarisierten Anode (13) durchgeführt wird.

14. Verfahren gemäß einem oder mehreren der Patentansprüche 1 bis 13,
dadurch gekennzeichnet, daß
es zum Entfernen von gelösten Halogenen aus der Gruppe Chlor, Brom, Jod aus Lösungen, die diese Halogene bis zur Sättigung enthalten, verwendet wird.

15. Verfahren gemäß Patentanspruch 14,
dadurch gekennzeichnet, daß
es zum Herstellen von Halogenwasserstoffsäuren aus der Gruppe HCl, HBr, HJ, die frei von gelösten Halogenen aus der Gruppe Chlor, Brom, Jod sind, verwendet wird.

16. Verfahren gemäß einem oder mehreren der Patentansprüche 1 bis 13,
dadurch gekennzeichnet, daß
es zum Reduzieren von Nitrationen in Lösungen verwendet wird.

17. Verfahren gemäß einem oder mehreren der Patentansprüche 1 bis 13,
dadurch gekennzeichnet, daß
es zum Entfernen von gelöstem Sauerstoff aus Wasser verwendet wird.

18. Verfahren gemäß einem oder mehreren der Patentansprüche 1 bis 17,
dadurch gekennzeichnet, daß
es mit mindestens zwei hintereinandergeschalteten Elektrolysezellen (1, 1', 1'') durchgeführt wird.

19. Elektrolysezelle (1, 1', 1''), die im wesentlichen aus zwei Räumen (2, 3), nämlich einem Raum (2, 2', 2''), der eine Kathode (5, 5') enthält, und der mindestens eine Zuführung (4) und mindestens eine Abführung (6) für den Katholyten aufweist und der von einem Katholyten durchströmbar ist, sowie einem Raum (3), der eine Anode (13) enthält und der mindestens eine Zuführung (11) und mindestens eine Abführung (12) für den Anolyten aufweist und der von einem Anolyten durchströmbar ist, besteht, wobei der Kathodenraum (2, 2', 2'') vom Anodenraum (3) durch eine für Ionen durchlässige Membran (10) getrennt ist und wobei die Zelle (1, 1', 1'') Einrichtungen aufweist, mit denen eine elektrische Potentialdifferenz zwischen der Anode (13) und der Kathode (5, 5') aufrechterhalten und ein elektrolytischer Prozeß in Gang gehalten werden kann,
dadurch gekennzeichnet,
- daß mindestens der Kathodenraum (2, 2', 2'') und die Kathode (5, 5') aus Materialien bestehen, die gegen freie Halogene aus der Gruppe Chlor, Brom, Jod, resistent sind,
- daß die Kathode (5, 5') als Festbett oder als Wirbelbett ausgebildet ist und
- daß die Kathode (5, 5') im Kathodenraum (2, 2', 2") so angeordnet ist, daß der Katholyt die Kathode (5, 5') durchströmen muß,
- daß die für Ionen durchlässige Membran (10) eine für Protonen durchlässige Kationenaustauschermembran (10) ist, die gegen freie Halogene aus der Gruppe Chlor, Brom, Jod beständig ist,
- daß der Kathodenraum (2, 2', 2'') von einem Katholyten durchströmbar ist, der reduzierbare Substanzen aus der Gruppe Chlor, Brom, Jod, Nitrationen, gelöster Sauerstoff enthält und
- daß sich der Anodenraum (3) an die Kationenaustauschermembran (10) anschließt,
- daß der Anodenraum (3) von einer Flüssigkeit durchströmbar ist, die Protonen in Lösung enthält und
- daß der Anodenraum (3) und die Anode (13) gegen protonensaure Medien beständig sind.

20. Elektrolysezelle gemäß Patentanspruch 19,
dadurch gekennzeichnet, daß
die Kathode (5, 5') als Festbett ausgebildet ist und aus Graphit besteht.

21. Elektrolysezelle gemäß Patentanspruch 20,
dadurch gekennzeichnet, daß
die Kathode (5, 5') aus Graphitkörnern besteht.

22. Elektrolysezelle gemäß Patentanspruch 19,
dadurch gekennzeichnet, daß
die Kathode (5, 5') als Wirbelbett ausgebildet ist und aus Graphitkörnern besteht.

23. Elektrolysezelle gemäß Patentanspruch 19,
dadurch gekennzeichnet, daß
die Kathode (5, 5') aus porösem Titanschwamm, der mit Edelmetallen aus der Platingruppe oder mit Edelmetalloxiden von Elementen der Platingruppe aktiviert worden ist, besteht.

24. Elektrolysezelle gemäß einem oder mehreren der Patentansprüche 19 bis 23,
dadurch gekennzeichnet, daß
die nicht die Begrenzung zum Anodenraum (3) bildenden Wände (15) des Kathodenraumes (2, 2') aus einem Material aus der Gruppe Polyethylen, Polypropylen, Fluorpolymere, Polyvinylchlorid, gummierte Metalle, mit Kunststoffen beschichtete oder ausgekleidete Metalle und Keramik bestehen.

25. Elektrolysezelle gemäß einem oder mehreren der Patentansprüche 19 bis 23,
dadurch gekennzeichnet, daß
die Wände (17) des Kathodenraumes (2''), die nicht aus der Kationenaustauschermembran (10) bestehen, aus flüssigkeitsdicht imprägniertem Graphit bestehen.

26. Elektrolysezelle gemäß einem oder mehreren der Patentansprüche 19 bis 25,
dadurch gekennzeichnet, daß
die Kationenaustauschermembran (10) aus einem mit einem anionischen Liganden dotierten Polymeren oder Copolymeren besteht, das aus Monomeren aus der Gruppe Tetrafluorethylen, Hexafluorpropylen, Monochlortrifluorethylen, Vinylidenfluorid und alpha-beta-beta-Trifluorstyrol hergestellt worden ist.

27. Elektrolysezelle gemäß einem oder mehreren der Patentansprüche 19 bis 26,
dadurch gekennzeichnet, daß
sich zwischen der Kationenaustauschermembran (10) und der Kathode (5, 5') ein Stützgewebe (9) oder Gitter (9) befindet.

28. Elektrolysezelle gemäß Patentanspruch 27,
dadurch gekennzeichnet, daß
das Stützgewebe (9) oder Gitter (9) aus einem Netz, Geflecht, Gestrick, Gewebe, Gitter, einem Sinterkörper oder einer perforierten Platte aus einem Material aus der Gruppe Polyethylen, Polypropylen, Fluorpolymere, Polyvinylchlorid, Titan, Tantal, Graphit besteht.

29. Elektrolysezelle gemäß einem oder mehreren der Patentansprüche 19 bis 28,
dadurch gekennzeichnet, daß
die Anode (13) aus Titan, das mit einer Beschichtung aus Platinmischoxid versehen ist, besteht.

30. Elektrolysezelle gemäß einem oder mehreren der Patentansprüche 19 bis 29,
dadurch gekennzeichnet, daß
die nicht an den Kathodenraum (2, 2', 2'') angrenzenden Wände (15') des Anodenraumes (3) aus einem Material aus der Gruppe Polyethylen, Polypropylen, Polyvinylchlorid, Fluorpolymere, gummiertes Metall, mit einem Fluorkunststoff beschichtetes Metall bestehen.

31. Elektrolysezelle gemäß einem oder mehreren der Patentansprüche 19 bis 30,
dadurch gekennzeichnet, daß
der Kathodenraum (2', 2'') und die Kathode (5') einen Querschnitt aufweisen, der sich in Strömungsrichtung des Katholyten vergrößert.

32. Elektrolysezelle gemäß einem oder mehreren der Patentansprüche 19 bis 31,
dadurch gekennzeichnet, daß
der Anodenraum (3) stets mit einem Protonenlieferanten aus der Gruppe verdünnte Schwefelsäure, Phosphorsäure, Perchlorsäure gefüllt ist.

33. Elektrolysezelle gemäß einem oder mehreren der Patentansprüche 19 bis 32,
dadurch gekennzeichnet, daß
die Anode (13) als depolarisierte Anode (13) ausgeführt ist.
